# EUROPÄISCHE PATENTSCHRIFT

(11) **EP 1 449 794 B1**
(45) Veröffentlichungstag und Bekanntmachung des Hinweises auf die Patenterteilung: **24.05.2006**
(21) Anmeldenummer: 04000481.4
(22) Anmeldetag: 13.01.2004
(51) Int. Cl.: B65G 1/04, B65G 1/10, B65G 1/02

(54) **Kragarmregal, Lagersystem und Lagerverfahren**
Cantilever type shelf, storage system and storage method
Rayonnage à bras en porte-à-faux, système de stockage et méthode de stockage

(30) Priorität: 18.02.2003 DE 10307901
(43) Veröffentlichungstag der Anmeldung: 25.08.2004
(73) Patentinhaber: SSI Schäfer AG, 8213 Neunkirch (CH)
(72) Erfinder: Schäfer, Gerhard, 57290 Neunkirchen (DE)
(74) Vertreter: Steil, Christian

(56) Entgegenhaltungen:
- DE-A- 4 028 059
- GB-A- 2 118 157
- US-A- 3 465 897

## Beschreibung

Die vorliegende Erfindung betrifft ein Kragarmregal mit einem Gestell, von dem wenigstens zwei Kragarme vorstehen, die quer zur Kragrichtung beabstandet sind und auf denen Lagergut, insbesondere längliches Lagergut, lagerbar ist, wobei wenigstens einer der Kragarme einen festen Kragarmschnitt, der starr mit dem Gestell verbunden ist, und einen teleskopierbaren Kragarmabschnitt aufweist, der an dem festen Kragarmabschnitt in Kragrichtung verschieblich gelagert ist, wobei das Kragarmregal wenigstens einen Motor zum Verschieben des teleskopierbaren Kragarmabschnittes aufweist.

Ein solches Kragarmregal ist im Dokument US 3,465,897 offenbart.

Ein bekanntes derartiges Kragarmregal weist eine Kurbel und eine Spindel zum Ein- und Ausfahren des teleskopierbaren Kragarmabschnittes auf.

Ferner betrifft die vorliegende Erfindung ein Lagersystem.

Das Dokument GB 2 118 157 offenbart ein Warenhaus für ein mechanisiertes Stapeln und Herausholen von dünnen, länglichen Lasten. Das Warenhaus weist eine Vielzahl von Regalen auf, die jeweils Fächer aufweisen, die wiederum auf ersten Schienen laufen. Ein Bockkran läuft auf zweiten Schienen, die sich außerhalb des Regals befinden, und weist einen vertikal beweglichen Schlitten auf, der mit ausfahrbaren und einziehbaren Transferarmen zum Transferieren der Lasten zwischen den Fächern und dem Schlitten ausgerüstet ist. Die Lasten werden des Weiteren zwischen dem Schlitten und einem Endlosförderer transferiert, der in einem Raum verläuft, der unterhalb der Fächer angeordnet ist. Ein Computersteuersystem ist vorgesehen, um die verschiedenen Transferschritte zu aktivieren und einen Datensatz hinsichtlich der Befüllung der Fächer vorzusehen.

Kragarmregale dienen zur Lagerung von Gütern mit mittleren und hohen Eigengewichten, insbesondere längliche Lagergüter (Langgut oder Kassetten), wie Rohre, Profile, Stangenmaterial, Schnittholz und Platten.

Kragarmregale weisen zu diesem Zweck ein Gestell auf, in der Regel wenigstens zwei vertikale Stützen bzw. Ständer. Das Gestell ist entweder statisch (beispielsweise am Boden festgeschraubt) oder dynamisch ausgebildet (auf einem Fahrwagen für ein Verschieberegal zur Erzielung einer höheren Lagerdichte).

Kragarmregale weisen ferner in der Regel mehrere übereinander angeordnete Regalebenen auf, die jeweils wenigstens ein Paar von dem Gestell vorstehender Kragarme aufweisen, die quer zur Kragrichtung beabstandet sind und auf denen das Lagergut lagerbar ist. Es versteht sich, dass in einer Regalebene auch mehrere Paare von Kragarmen nebeneinander angeordnet sein können. Ferner versteht sich, dass das Kragarmregal einseitig oder zweiseitig ausgebildet sein kann.

Zur Verbindung der Kragarme mit dem Gestell sind folgende Arten der Verbindung bekannt:
fest (beispielsweise geschweißt),
abnehmbar (beispielsweise geschraubt),
eingehängt (beispielsweise mittels Haken)
   und
gesteckt (mit Dorn gesichert).

Um eine hohe Lagerdichte zu erzielen, ist bei Lagersystemen mit mehreren Reihen von Kragarmregalen der in den Gassen zwischen den Kragarmregalen vorgesehene Platz in der Regel gering. Zum Be- und Entladen sind daher vergleichsweise aufwändige Manipulationsgeräte wie Seitenstapler oder ein Extraktor notwendig.

Bei dem eingangs genannten Stand der Technik, bei dem der oder die Kragarme eines jeweiligen Kragarmpaares teleskopierbar ausgestaltet sind, lässt sich das darauf gelagerte Lagergut leicht in eine ergonomisch und handhabungstechnisch günstige Kommissionierposition bringen.

Vor dem obigen Hindergrund besteht das der Erfindung zugrunde liegende Problem darin, ein verbessertes Kragarmregal und ein verbessertes Lagersystem anzugeben.

Diese Aufgabe wird bei dem eingangs genannten Kragarmregal dadurch gelöst, dass der Motor eine Welle antreibt, die quer zur Kragrichtung ausgerichtet und im Bereich des Gestells drehbar gelagert ist.

Durch diese Maßnahme ist es möglich, den Motor auf konstruktiv einfache Weise zum Antrieb beider Kragarme eines Kragarmpaares zu verwenden. Die Welle ist dabei im Bereich des Gestells drehbar gelagert und begrenzt folglich den Lagerraum nicht.

Ferner wird die obige Aufgabe gelöst durch ein Lagersystem mit einem Lagerverwaltungssystem, wenigstens einem Kragarmregal gemäß der Erfindung und Mitteln zum Ein- und Auslagern von Lagergut in das bzw. aus dem Kragarmregal, wobei das Kragarmregal ein Gestell und mehrere übereinander angeordnete Regalebenen aufweist, die jeweils wenigstens ein Paar von dem Gestell vorstehender Kragarme aufweisen, die quer zur Kragrichtung beabstandet sind und auf denen Lagergut, insbesondere längliches Lagergut, lagerbar ist, wobei zumindest ein Kragarm eines Kragarmpaares einer unteren Regalebene in Kragrichtung motorisch ausziehbar ist, und wobei das Lagerverwaltungssystem dazu ausgelegt ist, das Kragarmregal anzusteuern, um den Kragarm automatisiert auszuziehen, und die Lagermittel anzusteuern, einen Ein- oder Auslagervorgang auf das bzw. von dem ausgezogenen Kragarmpaar automatisiert durchzuführen.

Die Aufgabe wird auf diese Weise vollkommen gelöst.

Besonders bevorzugt ist es, wenn der Motor ein Elektromotor ist.

Denn elektrische Leistung steht in der Regel in Lagern, in denen Kragarmregale verwendet werden, problemlos zur Verfügung.

Gemäß einer besonders bevorzugten Ausführungsform ist der Motor im Bereich des Gestells festgelegt.

Hierdurch wird erreicht, dass die Lagerkapazität des Kragarmregals im Vergleich zu statischen Kragarmen nicht eingeschränkt ist.

Dabei ist es bevorzugt, wenn der Motor über ein Getriebe mit dem teleskopierbaren Kragarmabschnitt verbunden ist.

Hierdurch wird erreicht, dass Drehbewegungen des Motors in Längsbewegungen des teleskopierbaren Kragarmabschnittes umsetzbar sind.

Von besonderem Vorzug ist es ferner, wenn das Getriebe ein Zugmittelgetriebe aufweist.

Bei dieser Ausführungsform ist eine Umsetzung von Drehbewegungen einer quer zur Kragrichtung ausgerichteten Welle in Translationsbewegungen des teleskopierbaren Kragarmabschnittes konstruktiv günstig umsetzbar.

Insgesamt ist es ferner bevorzugt, wenn die Welle waagerecht ausgerichtet ist und dazu ausgelegt ist, mehrere Paare von Kragarmen derselben Regalebene anzutreiben.

Somit kann bei Lagersystemen mit mehreren Kragarmpaaren in einer Lagerebene das Ein- und Ausziehen der Kragarmpaare mittels eines einzelnen Motors erfolgen.

Gemäß einer weiteren bevorzugten Ausführungsform ist es bevorzugt, wenn der teleskopierbare Kragarm als Hohlprofil ausgebildet ist und den festen Kragarm umschließt.

Mit dieser Konstruktion können hohe Biegelasten aufgenommen werden. Ferner ist es möglich, in einem Zwischenraum zwischen dem festen und dem teleskopierbaren Kragarm schmutzempfindliche Konstruktionselemente aufzunehmen (wie Wälzlager, Linearführungen, etc.).

Besonders bevorzugt ist es, wenn das Getriebe bzw. ein Abschnitt des Getriebes in einen Zwischenraum zwischen dem festen und dem teleskopierbaren Kragarm reicht.

Hierdurch wird der umschlossene Teil des Getriebes vor Verschmutzung und Beschädigungen von außen geschützt.

Ferner ist es bevorzugt, wenn der teleskopierbare Kragarmabschnitt einen Ansatz aufweist, der wenigstens einen Lagerpunkt aufweist und in der nicht ausgezogenen Position in das Gestell greift, um den teleskopierbaren Kragarmabschnitt dort abzustützen.

Durch diese Maßnahme wird zum einen erreicht, dass die Tiefe des Gestells als Bauraum zum Lagern des teleskopierbaren Kragarmabschnittes benutzt wird. In der ausgezogenen Position des teleskopierbaren Kragarmabschnittes kann der Ansatz zum Abstützen an dem festen Kragarmabschnitt verwendet werden, derart, dass ein Lagerabschnitt des teleskopierbaren Kragarmabschnittes vollständig über die Vorderseite des Kragarmregals hinaus reicht.

Dabei ist es von besonderem Vorzug, wenn an dem festen Kragarmabschnitt eine Führungsschiene zum Abstützen des teleskopierbaren Kragarmabschnittes festgelegt ist und sich in das Gestell hinein erstreckt.

Durch diese Maßnahme ist eine unterbrechungsfreie Abstützung des teleskopierbaren Kragarmabschnittes von dem Gestell bis zum festen Kragarmabschnitt möglich.

Bei dem erfindungsgemäßen Lagersystem ist es von besonderem Vorteil, wenn die Mittel zum Ein- und Auslagern als Portalkran ausgebildet sind.

Ein Portalkran lässt sich gut zum Transportieren von länglichem Lagergut verwenden, wie es in Kragarmregalen häufig gelagert wird. Ferner können bei Lagersystemen mit mehreren Kragarmregalen die dazwischen befindlichen Gassen besonders schmal ausgebildet werden.

Dabei ist es von besonderem Vorteil, wenn der Portalkran einen pendelnd gelagerten Greifer für das Lagergut aufweist.

Ein solcher Greifer ist konstruktiv günstig zu realisieren. Insbesondere mit relativ geringem Gewicht.

Unter einem Portalkran sollen vorliegend sämtliche Arten von Kränen mit pendelnd gelagertem Greifer verstanden werden. Demzufolge umfasst der Begriff Portalkran auch Tragarmschienenkräne, Kräne mit Verfahrschiene, die an der Hallendecke befestigt sind (Hallenkran), etc.

Unter einer "pendelnden Lagerung" eines Greifers soll vorliegend verstanden werden, dass der Greifer von oben gelagert ist und keine Möglichkeit besitzt, hinter die Vorderseite eines Kragarmregales zu greifen. Dies betrifft insbesondere Greifer, die an Ketten oder Seilen gelagert sind. Unter einem pendelnd gelagerten Greifer soll jedoch beispielsweise auch ein an einer vertikalen Teleskopvorrichtung gelagerter Greifer verstanden werden.

Der Begriff Greifer ist im Rahmen der vorliegenden Anmeldung breit zu verstehen. Es kann sich um einen klassischen Zangengreifer, um eine Öse mit daran befestigbaren Gurten, um einen Elektromagnet, etc. handeln.

Gemäß einer weiteren bevorzugten Ausführungsform sind eine Mehrzahl von Kragarmregalen als motorisch angetriebenes Verschieberegallager ausgebildet, wobei das Lagerverwaltungssystem ferner dazu ausgelegt ist, für einen Ein- oder Auslagervorgang eine Gasse in dem Verschieberegallager zu öffnen.

Durch die Ausgestaltung eines Verschieberegallagers kann die Lagerkapazität bezogen auf das Raumvolumen stark gesteigert werden.

Dabei ist es von besonderem Vorzug, wenn Koppelmittel zum Aneinanderkoppeln von benachbarten Kragarmregalen vorgesehen sind, so dass ein Kragarmpaar durch Verschieben des benachbarten Kragarmregals ausgezogen bzw. eingeschoben werden kann.

Hierdurch sind in dem Kragarmregal keine vergleichsweise starken Motoren zum Ausfahren und Einfahren eines Kragarmpaares notwendig. Vielmehr wird die Kraft zum Ein- und Ausfahren durch den Motor aufgebracht, der zum Verschieben des benachbarten Kragarmregals verwendet wird. Für eine automatisierte Ansteuerung sind allenfalls relativ kleine Motoren notwendig, die die Koppelmittel betätigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht eines erfindungsgemäßen Lagersystems mit einem Kragarmregal und einem Portalkran;
- Fig. 2: eine schematische Längsschnittansicht eines Kragarms des erfindungsgemäßen Kragarmregals;
- Fig. 3: den Kragarm der Fig. 2 in einer ausgezogenen Position;
- Fig. 4: eine perspektivische Teilansicht eines erfindungsgemäßen Kragarmregals einer weiteren Ausführungsform;
- Fig. 5: eine perspektivische Teilansicht eines erfindungsgemäßen Kragarmregals gemäß einer weiteren Ausführungsform;
- Fig. 6: eine schematische Querschnittsansicht durch einen Kragarm eines erfindungsgemäßen Kragarmregals;
- Fig. 7: eine schematische Draufsicht auf ein Lagersystem mit einem Verschieberegallager, das eine Mehrzahl von Kragarmregalen aufweist;
- Fig. 8: eine schematische Seitenansicht eines Verschieberegallagers mit einer Mehrzahl von Kragarmregalen, wobei die Kragarmregale miteinander koppelbar sind, um einen motorischen Verschiebeantrieb der Kragarmregale zum Ein- und Ausfahren von Kragarmpaaren zu verwenden; und
- Fig. 9: eine der Fig. 8 entsprechende Ansicht mit einem ausgezogenen Kragarmpaar.

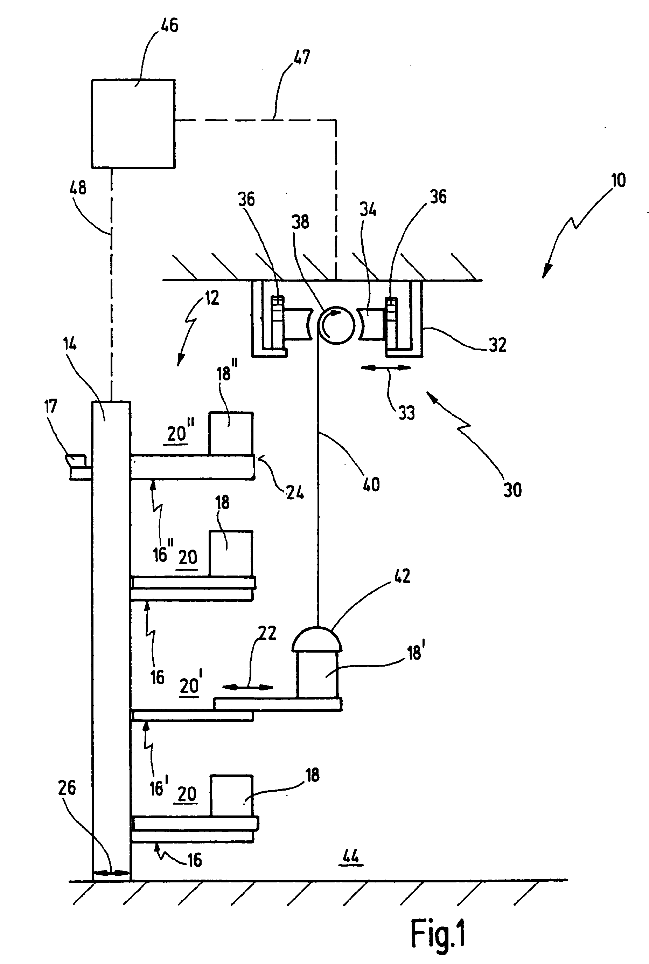

In Fig. 1 ist ein Lagersystem zum Lagern von Gütern mit mittleren und hohen Eigengewichten generell mit 10 bezeichnet.

Das Lagersystem 10 weist ein Kragarmregal 12 auf. Das Kragarmregal 12 weist ein vertikales Gestell 14 auf, das auf dem Boden aufsteht bzw. daran verankert ist.

Von dem Gestell 14 erstreckt sich eine Mehrzahl von Kragarmen 16 zu einer Seite hin. Das Kragarmregal 12 kann jedoch auch zweiseitig ausgebildet sein, wie es schematisch bei 17 angedeutet ist. Bei 17 ist ein Kragarm angedeutet, der sich in die den Kragarmen 16 entgegengesetzte Richtung erstreckt.

Die Kragarme 16 dienen zur Aufnahme von Lagergut 18, insbesondere länglichem Lagergut wie Rohre, Profile und Stangenmaterial, Schnittholz und Platten.

Das Kragarmregal 12 ist in eine Mehrzahl von vertikal übereinander angeordneten Regalebenen 20 unterteilt. Jeder Regalebene 20 ist wenigstens ein Paar von Kragarmen 16 zugeordnet, von denen in Fig. 1 jeweils nur einer dargestellt ist.

Es versteht sich, dass in einer Regalebene 20 nebeneinander auch mehrere Paare von Kragarmen 16 angeordnet sein können.

Die unteren Kragarme 16 sind jeweils ausziehbar entlang ihrer Kragrichtung 22 ausgebildet, wie es in Fig. 1 für einen der Kragarme 16' einer Regalebene 20' schematisch dargestellt ist.

Durch die Ausziehbarkeit wird erreicht, dass ein darauf gelagertes Lagergut 18' gegenüber einer Vorderkante 24 des Kragarmregals 12 vorsteht und demzufolge leichter be- bzw. entladen werden kann.

Insbesondere lässt sich das Lagergut 18' leichter von einem pendelnd gelagerten Greifer ergreifen, wie es nachstehend im Detail erläutert werden wird.

Vorzugsweise sind die obersten Kragarme 16" der obersten Ebene 20" nicht ausziehbar ausgebildet. Denn auf das Lagergut 18" der obersten Regalebene 20" kann mittels eines pendelnd gelagerten Greifers ohnehin zugegriffen werden. Demzufolge werden aufgrund der einfacheren Ausbildung des bzw. der obersten Kragarme 16" Kosten eingespart.

In der dargestellten Ausführungsform ist das Gestell 14 fest am Boden verankert. Es kann jedoch auch parallel zur Kragrichtung 22 verschieblich ausgebildet sein (beispielsweise auf einem motorisch verfahrbaren Fahrwagen), um ein Verschieberegalsystem mit mehreren Kragarmregalen 12 zu bilden. Dies ist schematisch bei 26 angedeutet.

Das Lagersystem 10 weist ferner einen Portalkran 30 auf.

Der Portalkran 30 beinhaltet eine Deckenlaufschiene 32, die an der Decke einer Lagerhalle oder an einem eigenen Portalgestell befestigt oder gelagert ist.

In Fig. 1 ist angedeutet, dass die Deckenlaufschiene 32 in einer Richtung quer zu ihrer Längserstreckung beweglich ist bzw. verfahren werden kann, s. Pfeil 33.

An der Deckenlaufschiene 32 ist ein Wagen 34 mittels Rädern 36 axial verschieblich gelagert (in der Darstellung der Fig. 1 senkrecht zur Papierebene).

An dem Wagen 34 ist eine Winde 38 festgelegt, die dazu ausgelegt ist, eine Lastenkette 40 aufzuwickeln. Am Ende der Lastenkette 40 ist ein Greifer 42 befestigt, im dargestellten Fall ein Elektromagnet. Der Greifer 42 ist generell an das Lagergut 18 angepasst und kann auch ein einfacher Haken zum Einhängen von Gurten o.ä. sein.

Zum Be- und Entladen des Kragarmregals 12 fährt der Portalkran 30 die Deckenlaufschiene 32 zunächst in die geeignete Querposition, um den Wagen 34 über der Regalgasse 44 verfahren zu können. Anschließend wird der Wagen 34 in eine geeignete Position vor ein zu be- bzw. entladendes Kragarmpaar 16' gefahren. Anschließend oder gleichzeitig hiermit wird der Greifer 42 mittels der Winde 38 auf die richtige Höhe gebracht.

Ferner wird der Kragarm 16' in Kragrichtung 22 ausgezogen, wie es in Fig. 1 dargestellt ist. In dieser Position kann der Greifer 42 das Lagergut 18' auf dem ausgezogenen Kragarmpaar 16' absetzen oder hiervon entnehmen.

Wie dargestellt, ist es nicht notwendig, die Kragarmpaare 16" der obersten Regalebene 20" ausziehbar auszugestalten, da der Portalkran 30 darauf gelagerte Lagergüter 18" ohnehin leicht ergreifen kann.

Ferner ist es natürlich möglich, Lagergüter 18 von Kragarmpaaren 16 zu entnehmen, die nicht ausgezogen sind, beispielsweise mittels eines in die Lagergasse fahrenden Seitenstaplers o.ä.

Ferner ist in Fig. 1 ein Lagerverwaltungssystem 46 schematisch dargestellt. Dieses ist zum einen mit dem Portalkran 30 gekoppelt, wie es schematisch bei 47 gezeigt ist, und zum anderen mit dem Kragarmregal 12, wie es schematisch bei 48 gezeigt ist.

Die oben beschriebenen Vorgänge zum Ein- und Auslagern von Lagergut 18 in das bzw. aus dem Kragarmregal 12 können demzufolge gesteuert durch das Lagerverwaltungssystem 46 automatisiert durchgeführt werden. Das Lagerverwaltungssystem 46 steuert dabei den Portalkran 30 und das Kragarmregal 12 bzw. einen Motor zum Ein- und Ausfahren von einem unteren Kragarm 16 koordiniert zueinander an, um das Ein- und Auslagern von Lagergut automatisiert durchführen zu können.

Es versteht sich, dass das Lagerverwaltungssystem 46 in der Regel eine chaotische Lagerhaltung ermöglicht.

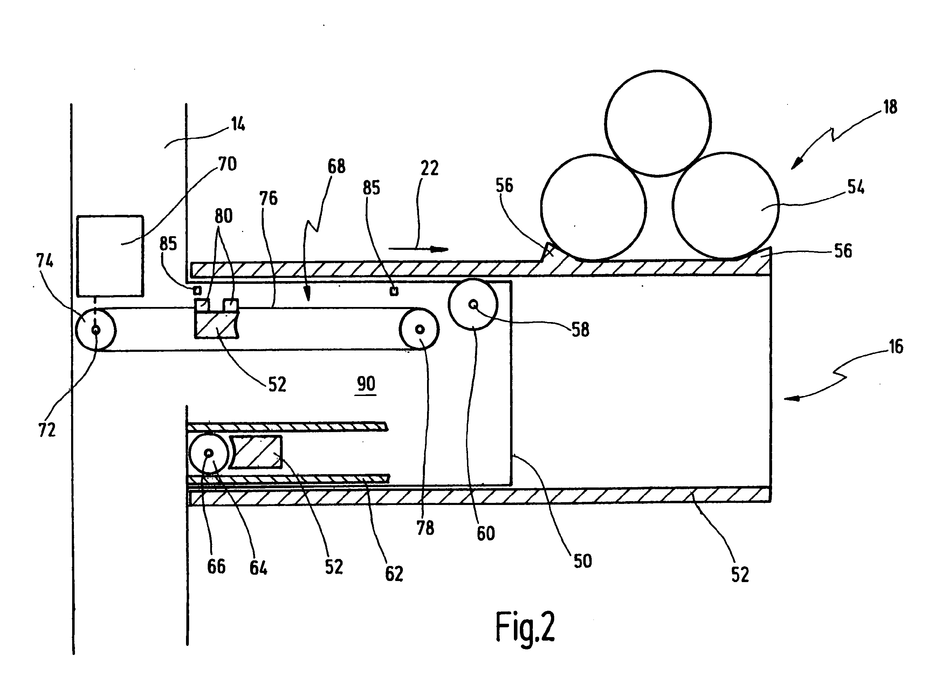

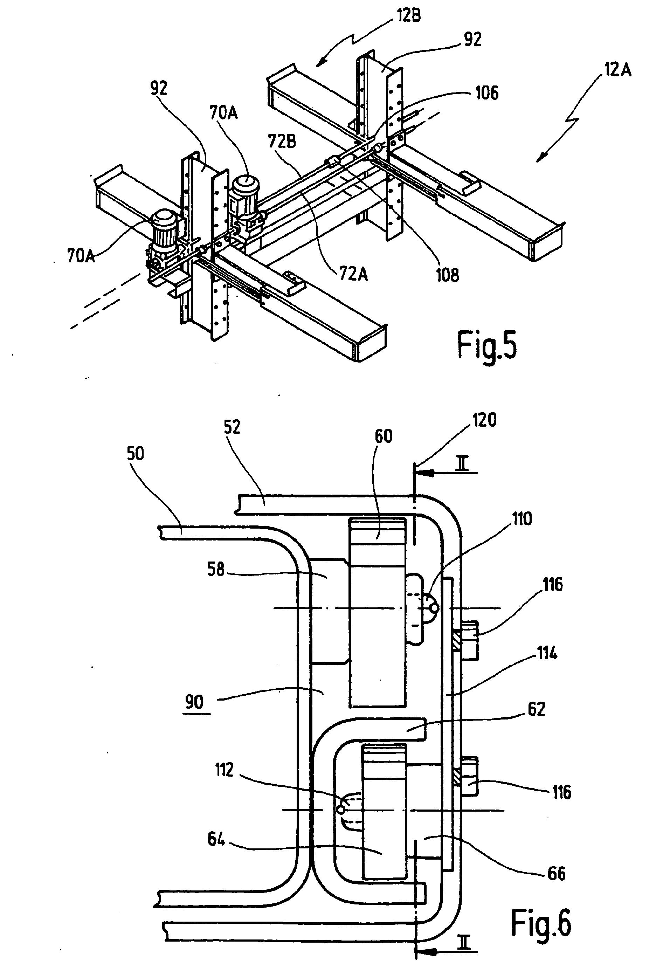

In Fig. 2 ist eine schematische Schnittdarstellung (vgl. Fig. 6) eines Kragarmes 16 dargestellt.

Der Kragarm 16 weist einen festen Kragarmabschnitt 50 auf, der fest mit dem Gestell 14 verbunden ist, beispielsweise mittels Schweißen, Schrauben, Einhängen o.ä. Ferner weist der Kragarm 16 einen teleskopierbaren Kragarmabschnitt 52 auf, der als Hohlprofil ausgebildet ist und den festen Kragarmabschnitt 50 generell umschließt.

Das Lagergut 18 in Form von Stangen 54 liegt auf einer Oberseite des teleskopierbaren Kragarmabschnittes 52 auf. Um zu erreichen, dass das Lagergut 18 generell in einem Lagerbereich des Kragarmes gelagert ist, sind an der Oberseite des teleskopierbaren Kragarmabschnittes 52 geeignete Anschläge 56 vorgesehen.

Der feste Kragarmabschnitt 50 und der teleskopierbare Kragarmabschnitt 52 sind über Rollen gegeneinander verschieblich gelagert.

An einem vorderen Ende des festen Kragarmabschnittes 50 ist auf beiden Seiten jeweils ein Lagerzapfen 58 ausgebildet, an dem eine Stützrolle 60 gelagert ist (in Fig. 2 nur eine gezeigt). Die Stützrolle 60 erstreckt sich über die Oberseite des festen Kragarmabschnittes 50 hinaus und ist folglich geeignet, eine Innenseite des teleskopierbaren Kragarmabschnittes 52 abzustützen.

Ferner ist auf beiden Seiten des festen Kragarmabschnittes 50 eine in Kragrichtung 22 verlaufende Führungsschiene 62 vorgesehen, in der jeweils eine Führungsrolle 64 läuft. Die Führungsrolle 64 ist an einem Lagerzapfen 66 gelagert, der an dem teleskopierbaren Kragarmabschnitt 52 festgelegt ist.

Zum Ein- und Ausziehen des teleskopierbaren Kragarmabschnittes 52 ist ein Zugmittelgetriebe 68 vorgesehen, das über eine Welle 72 mit einem Elektromotor 70 verbunden ist.

Der Elektromotor 70 ist im Bereich des Gestells 14 angeordnet und treibt über ein nicht dargestelltes Umlenkgetriebe die Welle 72 an, die sich generell waagrecht und quer zur Kragrichtung 22 erstreckt. An der Welle 72 ist ein Antriebsrad 74 des Zugmittelgetriebes 68 festgelegt. Eine Leerlaufrolle des Zugmittelgetriebes 68 ist in einem vorderen Bereich an dem festen Kragarmabschnitt 50 drehbar gelagert. Ein Zugmittel 76, beispielsweise eine Kette oder ein Zahnriemen, läuft um das Antriebsrad 74 und die Leerlaufrolle 78 um.

Ein Abschnitt des Zugmittels 76 im Ober- oder Untertrum ist mit dem teleskopierbaren Kragarmabschnitt 52 verbunden. Zu diesem Zweck kann das Zugmittel 76 beispielsweise aufgetrennt sein und mittels zweier Zugmittelschlösser 80 an einem Teil des teleskopierbaren Kragarmabschnittes 52 festgelegt sein.

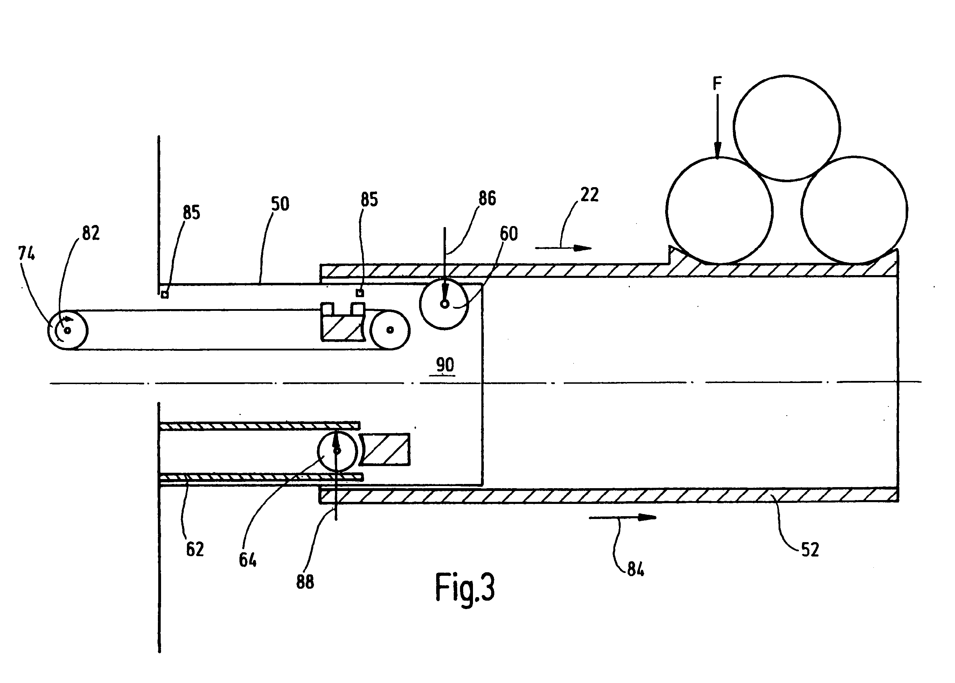

Wie es in Fig. 3 gezeigt ist, führt eine Drehung des Antriebsrades 74 (bei 82 gezeigt) zu einem Auszug des teleskopierbaren Kragarmabschnittes 52 (bei 84 gezeigt).

In entsprechender Weise kann durch eine Drehung des Antriebsrades 74 in die entgegengesetzte Richtung der teleskopierbare Kragarmabschnitt 52 auch wieder eingezogen werden.

Bei 85 sind in den Fig. 2 und 3 Sensoren bzw. Endschalter gezeigt, die es ermöglichen, den teleskopierbaren Kragarmabschnitt 52 ohne großen Steueraufwand in seine zwei Endpositionen zu fahren, zum einen die eingezogene Position gemäß Fig. 2 und zum anderen die ausgezogene Position gemäß Fig. 3.

Hierdurch ist es möglich, auf eine komplizierte Lageregelung des Motors 70 zu verzichten.

In Bezug auf den in den Fig. 2 und 3 gezeigten Kragarm 16 ist anzumerken, dass die Proportionen zur besseren und übersichtlicheren Darstellung der Einzelmerkmale verzerrt dargestellt sind.

In Fig. 3 ist ferner gezeigt, wie sich der teleskopierbare Kragarmabschnitt 52 an dem festen Kragarmabschnitt 50 abstützt. Eine von dem Lagergut 18 auf das freie Ende des teleskopierbaren Kragarmabschnittes 52 aufgebrachte Kraft F wird zum einen über die Stützrolle 60 und den zugeordneten Lagerzapfen 58 von dem festen Kragarmabschnitt 50 aufgenommen, wie es bei 86 in Fig. 3 gezeigt ist. Zum anderen stützt sich der teleskopierbare Kragarmabschnitt 52 mit seiner Führungsrolle 64 an der Führungsschiene 62 des festen Kragarmabschnittes 50 ab, wie es schematisch bei 88 gezeigt ist.

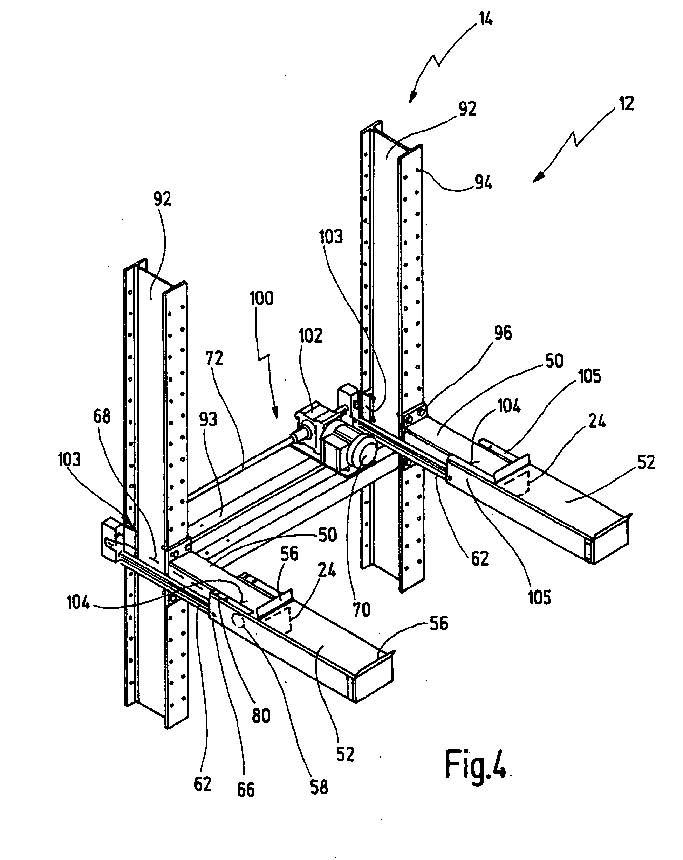

In Fig. 4 ist ein Ausschnitt eines Kragarmregals 12 in einer bevorzugten Ausgestaltung perspektivisch dargestellt.

Das in Fig. 4 gezeigte Kragarmregal weist Kragarme 16 mit im Wesentlichen denselben Merkmalen wie der in Fig. 2 und 3 gezeigte Kragarm auf. Deren grundlegende Betriebsweise wird daher im Zusammenhang mit Fig. 4 nicht noch einmal im Detail erläutert. Im Folgenden werden im Wesentlichen die Unterschiede dargelegt.

Das Gestell 14 weist zwei vertikale Stützen 92 auf, die jeweils ein Doppel-T-Profil besitzen. An den T-Abschnitten der Stützen 92 ist eine Mehrzahl von Bohrungen 94 vorgesehen, um in beliebiger Höhe feste Kragarmabschnitte 50 daran befestigen zu können, mittels Schrauben 96.

Das in Fig. 4 gezeigte Kragarmregal 12 ist als einseitiges Kragarmregal ausgebildet. Der elektrische Motor 70 ist zwischen zwei Stützen 92 festgelegt, beispielsweise an einem die zwei Stützen 92 verbindenden Riegel 93.

Die Abtriebswelle des Elektromotors 70 erstreckt sich entgegen der Kragrichtung und mündet in ein Umlenkgetriebe 102, das Teil eines insgesamt mit 100 bezeichneten Getriebes ist. Das Getriebe 100 dient dazu, Drehbewegungen des Elektromotors 70 in synchrone Ein- bzw. Auszugsbewegungen der teleskopierbaren Kragarmschnitte 52 einer Regalebene 20 umzusetzen.

Das Umlenkgetriebe 102 treibt eine Welle 72 an, die sich etwa parallel zu dem Riegel 93, d. h. etwa waagerecht erstreckt. Die Welle 72 verläuft bei dieser Ausführungsform auf der den Kragarmen 16 gegenüberliegenden Seite der Stützen 92 und ist daran mittels Stehlagern (nicht näher bezeichnet) gelagert.

Wie dargestellt, entspricht die Breite der festen Kragarmabschnitte 50 etwa der Breite der Stützen 92. Die Führungsschienen 62 erstrecken sich bei dem Kragarmregal 12 der Fig. 4 nicht nur entlang der Seiten der festen Kragarmabschnitte 50, sondern in das Gestell 14 hinein. Wie dargestellt, sind die Führungsschienen 62 an ihrem in das Gestell 14 hineinragenden Ende mittels jeweiliger Halterungen 103 an der jeweiligen Stütze 92 festgelegt. Bei den Halterungen 103 kann es sich um einfache L-Stücke handeln, die über die Bohrungen 94 festgelegt werden.

Die teleskopierbaren Kragarmabschnitte 52 sind etwa um die Tiefe der Stützen 92 länger ausgebildet als die festen Kragarmabschnitte 50. Die teleskopierbaren Kragarmabschnitte 52 sind an ihrer Oberseite und ihrer Unterseite jeweils mit einem von der Rückseite ausgehenden Ausschnitt 104 ausgebildet. Die teleskopierbaren Kragarmabschnitte 52 lassen sich daher in ihrer Ruhestellung soweit zurückschieben, dass die Stützen 92 jeweils in den Ausschnitten 104 liegen.

Die teleskopierbaren Kragarmabschnitte 52 weisen aufgrund der Ausschnitte 104 zwei seitliche Ansätze 105 auf, die in der nicht ausgezogenen Position die Stützen 92 seitlich umgreifen. Zumindest die Führungsrollen 64 sind im Bereich dieser Ansätze 105 festgelegt, so dass sich die teleskopierbaren Kragarmabschnitte 52 zumindest teilweise im Bereich des Gestells 14 abstützen.

Diese Ausgestaltung hat den Vorteil, dass der auf den teleskopierbaren Kragarmabschnitten 52 verfügbare Lagerbereich (zwischen Anschlägen 56) sich im Wesentlichen vollständig über die Vorderkante 24 des Kragarmregals 12 hinaus erstrecken kann. Mit anderen Worten kann der Lagerbereich zwischen den Anschlägen 56 annähernd der Länge der festen Kragarmabschnitte 50 entsprechen, so dass eine hohe Raumausnutzung erzielt wird.

In Fig. 5 ist ein zweiseitiges Kragarmregal mit einer ersten Seite 12A und einer zweiten Seite 12B dargestellt.

In den grundsätzlichen Eigenschaften entspricht das in Fig. 5 gezeigte Kragarmregal den Kragarmregalen der Fig. 2 bis 4. Im Folgenden wird lediglich auf die Unterschiede eingegangen.

Das Kragarmregal der Fig. 5 weist für jede der zwei Seiten 12A, 12B einen eigenen Elektromotor 70A bzw. 70B auf. Die beiden Elektromotoren 70A, 70B sind beide im Bereich des Gestells festgelegt, in der dargestellten Variante an quer zur Kragrichtung gegenüberliegenden Seiten einer Stütze 92.

Jeder der Elektromotoren 70A, 70B treibt eine eigene Welle 72A bzw. 72B an.

Im Unterschied zu der Ausführungsform der Fig. 4 verlaufen die Wellen durch die Stützen 92 hindurch, wie es schematisch bei 106 gezeigt ist.

Ferner ist in Fig. 5 gezeigt, dass die Wellen 72A, 72B mittels Wellenkupplungen 108 nahezu beliebig verlängerbar sind. Hierdurch kann erreicht werden, dass die Elektromotoren 70A, 70B jeweils nicht nur ein Paar von Kragarmen, sondern sämtliche Kragarmpaare einer Regalebene der jeweils zugeordneten Seite 12A bzw. 12B synchron antreiben.

Fig. 6 zeigt einen schematischen Querschnitt durch eine Seite eines Kragarmes mit einem als Hohlprofil ausgebildeten festen Kragarmabschnitt 50 und einem ebenfalls als Hohlprofil ausgebildeten teleskopierbaren Kragarmabschnitt 52.

Wie gezeigt, sind die Hohlprofile so bemessen, dass zwischen den Seiten des festen und des teleskopierbaren Kragarmabschnittes 50, 52 ein Zwischenraum 90 eingerichtet ist (vgl. auch Fig. 2). Der Zwischenraum 90 dient zur schützenden Aufnahme der Elemente zum Lagern des teleskopierbaren Kragarmabschnittes 52 an dem festen Kragarmabschnitt 50 (insbesondere die Stützrolle 60 und die Führungsrolle 64 in der Führungsschiene 62). Ferner dient der Zwischenraum 90 zur Aufnahme des Zugmittelschlosses 80 (vgl. auch Fig. 4) und der Leerlaufrolle 78 des Zugmittelgetriebes 68.

Es versteht sich, dass zur Lagerung des teleskopierbaren Kragarmabschnittes 52 an dem festen Kragarmabschnitt 50 auf jeder Seite jeweils eine Stützrolle 60 und eine Führungsrolle 64 vorgesehen sind. Es versteht sich ferner, dass das Zugmittelgetriebe 68 nur an einer Seite des Kragarmes 16 vorgesehen werden muss, aber natürlich auch an beiden Seiten ein separates Zugmittelgetriebe 68 vorgesehen sein kann.

Wie es in Fig. 6 gezeigt ist, ist in dem Lagerzapfen 68 für die Stützrolle 60 eine Kugeldruckschraube 110 vorgesehen. In dem Lagerzapfen 66 für die Führungsrolle 64 ist eine weitere Kugeldruckschraube 112 vorgesehen.

Die Kugeldruckschrauben 110, 112 dienen dazu, den teleskopierbaren Kragarmabschnitt 52 in seitlicher Richtung im Wesentlichen spielfrei an dem festen Kragarmabschnitt 50 zu lagern. Zum Einstellen des seitlichen Spiels kann ferner eine geeignete verstellbare Lageranordnung vorgesehen sein, im dargestellten Ausführungsbeispiel eine mittels Einstellschraube 16 seitlich verschiebbare Lagerplatte 114.

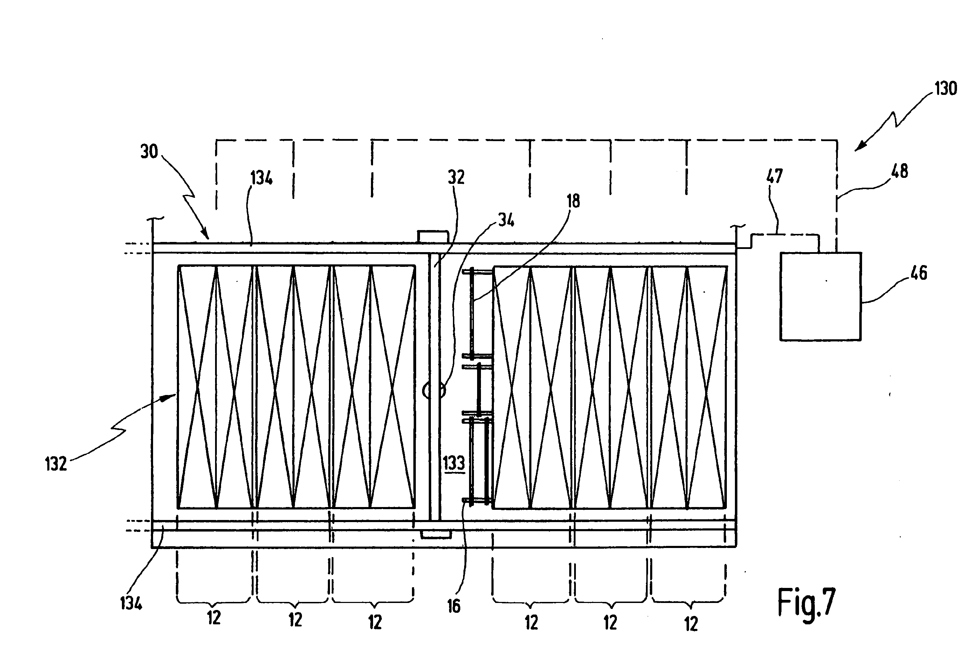

In Fig. 7 ist eine Draufsicht auf ein Lagersystem 130 gezeigt, das eine Mehrzahl von Kragarmregalen 12 aufweist, die als ein Verschieberegallager 132 ausgebildet sind.

Das heißt, jedes Kragarmregal 12 ist in einer Richtung quer zu seiner Längserstreckung mittels eines Motors verschieblich ausgebildet. Dabei kann jedes Kragarmregal 12 einen eigenen Motor besitzen. Alternativ können auch Kragarmregale in Gruppen durch jeweils einen Motor bewegt werden.

Das Verschieberegallager 132 ist so ausgebildet, dass jeweils zwischen zwei Kragarmregalen eine Gasse 133 geöffnet werden kann. Demzufolge kann auf Lagergut in den zu der Gasse 133 benachbarten Kragarmregalen 12 zugegriffen werden.

In Fig. 7 ist schematisch gezeigt, dass von dem Kragarmregal 12 zur rechten Seite der Gasse 133 (in der Orientierung der Fig. 7) drei Kragarmpaare ausgezogen sind, auf denen jeweils längliches Lagergut 18 gelagert ist.

Ferner weist das Lagersystem 130 einen Portalkran 30 auf, der zwei parallel zur Verschieberichtung angeordnete Längsschienen 134 beinhaltet.

An den Längsschienen 134 ist eine Querschiene 32 motorisch verschiebbar gelagert, deren Funktion der Deckenlaufschiene 32 des Portalkrans 30 der Fig. 1 entspricht.

Entsprechend ist an der Querschiene 32 ein Wagen 34 in einer Richtung quer zur Verschieberichtung motorisch verschieblich gelagert. Demzufolge kann durch Verschieben des Wagens 34 auf eines der drei ausgezogenen Kragarmpaare zugegriffen werden, um Lagergut 18 ein- oder auszulagern.

Ferner ist in Fig. 7 wiederum ein Lagerverwaltungssystem 46 gezeigt. Dieses ist zum einen mit dem Portalkran 30 gekoppelt (über die schematisch angedeutete Leitung 30), und zum anderen mit dem Verschieberegallager 132 (bei 48 gezeigt). Dabei beinhaltet die Verbindung 48 nicht nur eine Verbindung zu Motoren des Verschieberegallagers 132, die zum Verschieben der einzelnen Kragarmregale 12 vorgesehen sind. Vielmehr beinhaltet die Verbindung 48 auch eine Ansteuerung der einzelnen Kragarmregale 12, um somit einzelne Kragarmpaare oder Kragarmpaare einer Regalebene 20 zusammen motorisch auszufahren.

Demzufolge beinhaltet ein typischer Einlagervorgang bei dem Lagersystem 130 die folgenden Schritte. Zunächst wird mittels des Portalkrans 30 ein Lagergut geholt (beispielsweise von einer Übergabeeinheit (nicht gezeigt). Hiernach oder gleichzeitig hiermit wird das Verschieberegallager 132 so angesteuert, dass eine Gasse 133 geöffnet wird, die benachbart zu dem Kragarmregal 12 ist, in das das Lagergut 18 einzulagern ist.

Anschließend wird das betreffende Kragarmregal 12 so angesteuert, dass das Kragarmpaar oder die Kragarmpaare der gleichen Regalebene 20 motorisch ausgefahren werden.

Anschließend setzt der Portalkran 30 das Lagergut nach Anfahren des gewünschten Kragarmpaares darauf ab und löst sich von dem Lagergut 18. Der Portalkran 30 fährt wieder in seine Ausgangsposition zurück. Das Kragarmpaar bzw. die Kragarmpaare der Regalebene 20 werden wieder eingefahren. Hieran anschließend kann ein weiterer Ein- oder Auslagervorgang in entsprechender Weise erfolgen.

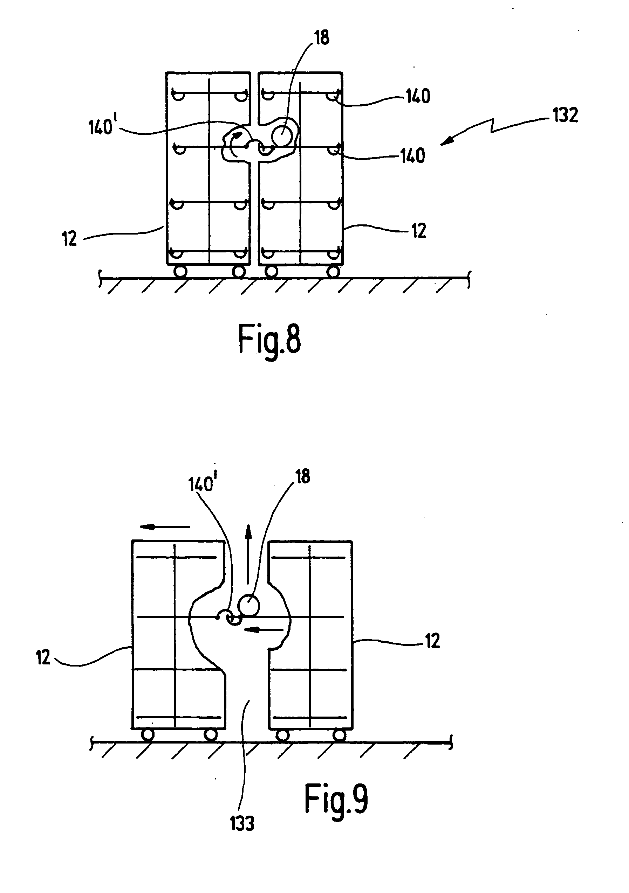

In Fig. 8 ist in schematischer Weise eine Seitenansicht eines Verschieberegallagers 132 gezeigt. Bei dem Verschieberegallager 132 der Fig. 8 ist die Besonderheit vorgesehen, dass die einzelnen Kragarmpaare bzw. die Kragarmpaare einer Regalebene 20 jeweils mit Koppelmitteln 140 ausgestattet sind.

Die Koppelmittel 140 sind dazu ausgelegt, eine mechanische Kopplung mit einem Kragarmregalpaar bzw. den Kragarmpaaren einer Regalebene 20 herzustellen, wie dies schematisch in Fig. 8 durch einen Pfeil dargestellt ist.

Die Koppelmittel 140 können motorisch angetrieben sein, und zwar mittels eines relativ kleinen Motors (z.B. Elektromotor, aber auch hydraulisch, pneumatisch oder elektromagnetisch), da bei der Kopplung keine hohen Lasten zu bewegen sind.

Nunmehr kann ein Ausziehvorgang des Kragarmpaares (oder der Kragarmpaare einer Regalebene) erfolgen, indem das eine Regal 12 durch seinen Verschiebemotor in Verschieberichtung verfahren wird, wie es in Fig. 9 schematisch angedeutet wird. Hierdurch wird das Kragarmpaar (bzw. die Kragarmpaare der Regalebene) ausgezogen, ohne dass an dem betreffenden Kragarmregal ein eigener, vergleichsweise stark auszulegender Motor vorzusehen ist.

Es versteht sich, dass diese Ausführungsform dann besonders vorteilhaft ist, wenn die Kragarmregale 12 jeweils identisch aufgebaut sind, d.h. mit Kragarmpaaren in jeweils gleicher Höhe.

Ferner versteht sich, dass durch weitere (nicht gezeigte) Verriegelungsmittel verhindert werden kann, dass auch ein Kragarmpaar des verschobenen Kragarmregals (das linke Regal in Fig. 9) ausgezogen wird.

Bei einer weiteren Alternative ist es auch möglich, dass bei einem derartigen Vorgang jeweils beide gegenüberliegenden, miteinander über die Koppelmittel 140 gekoppelten Kragarmpaare beider Kragarmregale 12 ausgezogen werden. Dies bedingt natürlich, dass die Gasse 133 dann entsprechend breiter ausgelegt wird.

Sofern vorliegend ein Lagerverwaltungssystem erwähnt wird, versteht sich, dass dieses nicht nur das Verwaltungssystem (Rechner) als solches sondern auch damit verbundene Steuerungen für die jeweilige Mechanik umfasst, beispielsweise in Form von SPSen.

## Patentansprüche

1. Kragarmregal (12) mit einem Gestell (14), von dem wenigstens zwei Kragarme (16) vorstehen, die quer zur Kragrichtung (22) beabstandet sind und auf denen Lagergut (18), insbesondere längliches Lagergut (54), lagerbar ist, wobei wenigstens einer der Kragarme (16) einen festen Kragarmabschnitt (50), der starr mit dem Gestell (14) verbunden ist, und einen teleskopierbaren Kragarmabschnitt (52) aufweist, der an dem festen Kragarmabschnitt (50) in Kragrichtung (22) verschieblich gelagert ist, wobei das Kragarmregal (12) wenigstens einen Motor (70) zum Verschieben des teleskopierbaren Kragarmabschnittes (52) aufweist,
**dadurch gekennzeichnet, dass**
der Motor (70) eine Welle (72) antreibt, die quer zur Kragrichtung (22) ausgerichtet und im Bereich des Gestells (14) drehbar gelagert ist.

2. Kragarmregal nach Anspruch 1, **dadurch gekennzeichnet, dass** der Motor ein Elektromotor (70) ist.

3. Kragarmregal nach Anspruch 1 oder 2, **dadurch gekennzeichnet, dass** der Motor (70) im Bereich des Gestells (14) festgelegt ist.

4. Kragarmregal nach einem der Ansprüche 1 bis 3, **dadurch gekennzeichnet, dass** der Motor (70) über ein Getriebe (100) mit dem teleskopierbaren Kragarmabschnitt (52) verbunden ist.

5. Kragarmregal nach einem der Ansprüche 1 bis 4, **dadurch gekennzeichnet, dass** das Getriebe (100) ein Zugmittelgetriebe (68) aufweist.

6. Kragarmregal nach einem der Ansprüche 1 bis 5, **dadurch gekennzeichnet, dass** die Welle (72) waagerecht ausgerichtet ist und dazu ausgelegt ist, mehrere Paare von Kragarmen (16) derselben Regalebene (20) anzutreiben.

7. Kragarmregal nach einem der Ansprüche 1 bis 6, **dadurch gekennzeichnet, dass** der teleskopierbare Kragarmabschnitt (52) als Hohlprofil ausgebildet ist und den festen Kragarmabschnitt (50) umschließt.

8. Kragarmregal nach Anspruch 4 und 7, **dadurch gekennzeichnet, dass** das Getriebe in einen Zwischenraum (90) zwischen dem festen und dem teleskopierbaren Kragarmabschnitt (50, 52) reicht.

9. Kragarmregal nach Anspruch 7 oder 8, **dadurch gekennzeichnet, dass** der teleskopierbare Kragarmabschnitt (52) einen Ansatz (105) aufweist, der wenigstens einen Lagerpunkt (66) aufweist und in der nicht ausgezogenen Position in das Gestell (14) greift, um den teleskopierbaren Kragarmabschnitt (52) dort abzustützen.

10. Kragarmregal nach einem der Ansprüche 1 bis 9, **dadurch gekennzeichnet, dass** eine Führungsschiene (62) zum Abstützen des teleskopierbaren Kragarmabschnittes (52) an dem festen Kragarmabschnitt (50) festgelegt ist und sich in das Gestell (14) hinein erstreckt.

11. Kragarmregal nach einem der Ansprüche 1 - 10, **dadurch gekennzeichnet, dass** an dem festen Kragarmabschnitt (50) Endschalter (85) angeordnet sind, um den Motor bei Erreichen der ausgezogenen und bei der eingefahrenen Stellung anzuhalten.

12. Lagersystem (10; 130) mit einem Lagerverwaltungssystem (46), wenigstens einem Kragarmregal (12) gemäß einem der Ansprüche 1 bis 11, und Mitteln (30) zum Ein- und Auslagern von Lagergut (18) in das bzw. aus dem Kragarmregal (12), wobei das Kragarmregal (12) ein Gestell (14) und mehrere übereinander angeordnete Regalebenen (20) aufweist, die jeweils wenigstens ein Paar von dem Gestell (14) vorstehender Kragarme (16) aufweisen, die quer zur Kragrichtung (22) beabstandet sind und auf denen Lagergut (18), insbesondere längliches Lagergut (54) lagerbar ist, wobei zumindest ein Kragarm (16) eines Kragarmpaars einer unteren Regalebene (20) in Kragrichtung motorisch ausziehbar ist, **dadurch gekennzeichnet, dass** das Lagerverwaltungssytem (46) dazu ausgelegt ist, das Kragarmregal (12) anzusteuern, um den Kragarm (16) automatisiert auszuziehen, und die Lagermittel (30) anzusteuern, einen Ein- oder Auslagervorgang auf das bzw. von dem ausgezogenen Kragarmpaar (16) automatisiert durchzuführen.

13. Lagersystem nach Anspruch 12, wobei die Mittel (30) zum Ein- und Auslagern als Portalkran (30) ausgebildet sind.

14. Lagersystem nach Anspruch 13, wobei der Portalkran (30) einen pendelnd gelagerten Greifer (42) für das Lagergut (18) aufweist.

15. Lagersystem nach einem der Ansprüche 12 - 14, wobei eine Mehrzahl von Kragarmregalen (12) als motorisch angetriebenes Verschieberegallager (132) ausgebildet sind und wobei das Lagerverwaltungssystem (46) ferner dazu ausgelegt ist, für einen Ein- oder Auslagervorgang eine Gasse (133) in dem Verschieberegalllager (132) zu öffnen.

16. Lagersystem nach Anspruch 15, wobei Koppelmittel (140) zum Aneinanderkoppeln von benachbarten Kragarmregalen vorgesehen sind, so dass ein Kragarmpaar (16) durch Verschieben des benachbarten Kragarmregals (12) ausgezogen bzw. eingeschoben werden kann.

## Claims

1. A cantilever arm shelf (12) having a rack (14) from which at least two cantilever arms (16) protrude, the cantilever arms being spaced transversally relative to a projection direction (22) and being capable of storing storage goods (18), particularly longitudinal storage goods (54), wherein at least one of the cantilever arms (16) comprises a fixed cantilever arm section (50), which is rigidly connected to the rack (14), and a telescopic cantilever arm section (52), which is mounted on the fixed cantilever arm section (50) displaceably along the projection direction (22), wherein the cantilever arm shelf (12) includes at least one motor (70) for displacing the telescopic cantilever arm section (52),
**characterized in that**
the motor (70) drives a shaft (72) which is oriented transversally relative to the projection direction (22) and is rotatably mounted in the region of the rack (14).

2. The cantilever arm shelf according to claim 1, **characterized in that** the motor is an electric motor (70).

3. The cantilever arm shelf according to claim 1 or 2, **characterized in that** the motor (70) is mounted within the region of the rack (14).

4. The cantilever arm shelf according to one of claims 1 to 3, **characterized in that** the motor (70) is connected to the telescopic cantilever arm section (52) by a gear (100).

5. The cantilever arm shelf according to one of claims 1 to 4, **characterized in that** the gear (100) includes a traction mechanism gear (68).

6. The cantilever arm shelf according to one of claims 1 to 5, **characterized in that** the shaft (72) is orientated horizontally and adapted for driving several pairs of cantilever arms (16) of an identical shelf plane (20).

7. The cantilever arm shelf according to one of claims 1 to 6, **characterized in that** the telescopic cantilever arm section (52) is formed as hollow section and encloses the fixed cantilever arm section (50).

8. The cantilever arm shelf according to claim 4 and 7, **characterized in that** the gear reaches into an intermediate space (90) between the fixed and the telescopic cantilever arm sections (50, 52).

9. The cantilever arm shelf according to claim 7 or 8, **characterized in that** the telescopic cantilever arm section (52) includes a dock (105) which comprises at least one bearing point (66) and engages into the rack (14) in an unextracted position, in order to support the telescopic cantilever arm section (52) there.

10. The cantilever arm shelf according to one of claims 1 to 9, **characterized in that** a guidance track (62) for supporting the telescopic cantilever arm section (52) is mounted on the fixed cantilever arm section (50) and extends into the rack (14).

11. The cantilever arm shelf according to one of claims 1 to 10, **characterized by** position switches (85) which are arranged on the fixed cantilever arm section (50) in order to stop the motor when the extracted position or the inserted position is reached.

12. A storage system (10; 130) comprising a storage management system (46), at least one cantilever arm shelf (12) according to one of claims 1 to 11, and means (30) for storing-in and storing-out storage goods (18) into and out of the cantilever arm shelf (12), respectively, wherein the cantilever arm shelf (12) has a rack (14) and several stacked shelf planes (20), each shelf plane having at least one pair of cantilever arms (16) protruding from the rack (14), the cantilever arms being spaced transversely relative to a projection direction (22) and capable of storing storage goods (18), particularly longitudinal storage goods (54), wherein at least one cantilever arm (16) of the pair of cantilever arms of a lower shelf plane (20) is motively extractable, **characterized in that** the storage management system (46) is adapted for controlling the cantilever arm shelf (12) in order to extract the cantilever arm (16) automatically, and controlling the storage means (30) for performing a storing-in procedure or a storing-out procedure onto and from the extracted pair of cantilever arms (16) automatically, respectively.

13. The storage system according to claim 12, wherein the means (30) for storing-in and storing-out is a portal crane (30).

14. The storing system according to claim 13, wherein the portal crane (30) comprises grabbing means (42) for grabbing the storage goods (18) which is mounted pendulously.

15. The storage system according to one of claims 12 to 14, wherein a plurality of cantilever arm shelves (12) is a motively driven shift type shelf store (132), and wherein the storage management system (46) is further adapted for opening a lane (133) in the shift type shelf store (132) for a storing-in or a storing-out procedure.

16. The storage system according to claim 15, wherein coupling means (140) for coupling together adjacent cantilever arm shelves are provided, such that a pair of cantilever arms (16) can be extracted or inserted by shifting the adjacent cantilever arm shelf (12).

## Revendications

1. Rayonnage à bras en porte-à-faux (12) avec une structure (14) de laquelle dépassent au moins deux bras en porte-à-faux (16) qui sont espacés transversalement à la direction du porte-à-faux (22) et sur lesquels peuvent être stockés des produits de stockage (18), en particulier des produits de stockage allongés (54), au moins l'un des bras en porte-à-faux (16) présentant un tronçon de bras en porte-à-faux fixe (50) qui est relié rigidement à la structure (14), et un tronçon de bras en porte-à-faux télescopique (52) qui est monté sur le tronçon de bras en porte-à-faux fixe (50) de manière à coulisser dans la direction du porte-à-faux (22), le rayonnage à bras en porte-à-faux (12) comportant au moins un moteur (70) pour la translation du tronçon de bras en porte-à-faux télescopique (52),
**caractérisé en ce que**
le moteur (70) entraîne un arbre (72) qui est orienté transversalement à la direction du porte-à-faux (22) et est monté tournant dans la zone de la structure (14).

2. Rayonnage à bras en porte-à-faux selon la revendication 1, **caractérisé en ce que** le moteur est un moteur électrique (70).

3. Rayonnage à bras en porte-à-faux selon la revendication 1 ou 2, **caractérisé en ce que** le moteur (70) est fixé dans la zone de la structure (14).

4. Rayonnage à bras en porte-à-faux selon l'une des revendications 1 à 3, **caractérisé en ce que** le moteur (70) est relié par une transmission (100) au tronçon de bras en porte-à-faux télescopique (52).

5. Rayonnage à bras en porte-à-faux selon l'une des revendications 1 à 4, **caractérisé en ce que** la transmission (100) comporte une transmission à moyen de traction (68).

6. Rayonnage à bras en porte-à-faux selon l'une des revendications 1 à 5, **caractérisé en ce que** l'arbre (72) est orienté horizontalement et est dimensionné pour entraîner plusieurs paires de bras en porte-à-faux (16) du même plan de rayonnage (20).

7. Rayonnage à bras en porte-à-faux selon l'une des revendications 1 à 6, **caractérisé en ce que** le tronçon de bras en porte-à-faux télescopique (52) est réalisé sous la forme d'un profilé creux et entoure le tronçon de bras en porte-à-faux fixe (50).

8. Rayonnage à bras en porte-à-faux selon les revendications 4 et 7, **caractérisé en ce que** la transmission s'étend dans un espace intermédiaire (90) situé entre le tronçon de bras en porte-à-faux fixe (50) et le tronçon de bras en porte-à-faux télescopique (52).

9. Rayonnage à bras en porte-à-faux selon la revendication 7 ou 8, **caractérisé en ce que** le tronçon de bras en porte-à-faux télescopique (52) comporte un appendice (105) qui présente au moins un point d'appui (66) et qui s'engage, dans la position non sortie, dans la structure (14) afin de soutenir à cet endroit le tronçon de bras en porte-à-faux télescopique (52).

10. Rayonnage à bras en porte-à-faux selon l'une des revendications 1 à 9, **caractérisé en ce qu'**un rail de guidage (62) est fixé sur le tronçon de bras en porte-à-faux fixe (50), pour soutenir le tronçon de bras en porte-à-faux télescopique (52), et s'étend à l'intérieur de la structure (14).

11. Rayonnage à bras en porte-à-faux selon l'une des revendications 1 à 10, **caractérisé en ce que** sur le tronçon de bras en porte-à-faux fixe (50) sont disposés des interrupteurs de fin de course (85) pour arrêter le moteur lorsqu'est atteinte la position sortie et dans la position rentrée.

12. Système de stockage (10 ; 130) avec un système de gestion de stock (46), au moins un rayonnage à bras en porte-à-faux (12) selon l'une des revendications 1 à 11, et des moyens (30) pour stocker et déstocker des produits de stockage (18) dans le rayonnage à bras en porte-à-faux (12) ou depuis celui-ci, le rayonnage à bras en porte-à-faux (12) comportant une structure (14) et plusieurs plans de rayonnage (20) superposés qui comportent chacun au moins une paire de bras en porte-à-faux (16) dépassant de la structure (14), qui sont espacés transversalement à la direction du porte-à-faux (22) et sur lesquels peuvent être stockés des produits de stockage (18), en particulier des produits de stockage (54) allongés, au moins un bras en porte-à-faux (16) d'une paire de bras en porte-à-faux d'un plan de rayonnage inférieur (20) pouvant être extrait de manière motorisée dans la direction du porte-à-faux, **caractérisé en ce que** le système de gestion de stock (46) est conçu pour commander le rayonnage à bras en porte-à-faux (12) afin de déployer de manière automatisée le bras en porte-à-faux (16), et pour commander les moyens de stockage (30), et pour exécuter de manière automatisée une opération de stockage ou de déstockage sur la paire de bras en porte-à-faux (16) extraite ou depuis celle-ci.

13. Système de stockage selon la revendication 12, dans lequel les moyens (30) de stockage et de déstockage sont réalisés sous la forme d'une grue portique (30).

14. Système de stockage selon la revendication 13, dans lequel la grue portique (30) comporte une pince (42) montée de façon suspendue pour le produit de stockage (18).

15. Système de stockage selon l'une des revendications 12 à 14, dans lequel une pluralité de rayonnages à bras en porte-à-faux (12) est réalisée sous la forme d'un magasin à rayonnages déplaçables (132), entraîné par un moteur, et dans lequel le système de gestion de stock (46) est conçu en outre pour ouvrir une voie (133) dans le magasin à rayonnages déplaçables (132), pour une opération de stockage ou de déstockage.

16. Système de stockage selon la revendication 15, dans lequel sont prévus des moyens de couplage (140) pour coupler entre eux des rayonnages à bras en porte-à-faux voisins, de manière qu'une paire de bras en porte-à-faux (16) puisse être sortie ou rentrée par déplacement du rayonnage à bras en porte-à-faux (12) voisin.
